# EUROPEAN PATENT SPECIFICATION

(11) **EP 3 202 121 B1**
(45) Date of publication and mention of the grant of the patent: **05.12.2018**
(21) Application number: 14789628.6
(22) Date of filing: 03.10.2014
(51) Int. Cl.: H04L 29/12, H04W 4/00

(54) **DYNAMIC GENERATION OF UNIQUE IDENTIFIERS IN A SYSTEM OF CONNECTED THINGS**
DYNAMISCHE ERZEUGUNG VON EINMALIGEN IDENTIFIKATOREN IN EINEM SYSTEM VERBUNDENER DINGE
GÉNÉRATION DYNAMIQUE D'IDENTIFICATEURS UNIQUES DANS UN SYSTÈME D'OBJETS CONNECTÉS

(43) Date of publication of application: 09.08.2017
(73) Proprietor: Telefonaktiebolaget LM Ericsson (publ), 164 83 Stockholm (SE)
(72) Inventor: ARSENAULT, Marc-Olivier, St Constant, Québec J5A1T8 (CA); ROCHEFORT, Steven, Pointe Claire, Québec H9R 4L2 (CA); MADOUR, Lila, Kirkland, Québec H9J 3Z8 (CA)
(74) Representative: Ericsson
(86) International application number: PCT/IB2014/065050
(87) International publication number: WO 2016/051237

(56) References cited:
- US-A1- 2013 308 566
- US-A1- 2013 318 218
- US-B1- 8 495 072

## Description

### TECHNICAL FIELD

This disclosure relates generally to dynamically generating of unique identifiers for connecting Internet of Things (IoT) devices to the application servers over a communication network.

### BACKGROUND

There is an increasing trend in integrating the internet with the physical world to create the Internet of Things (IoT), also referred to as Cloud of Things, Internet of Objects, Machine-to-Machine (M2M) communications, with a prediction that up to 50 billion devices will be connected to the internet by 2020. Connecting remote devices, machines, assets and other entities to create value-based systems, to optimize a variety of goods-delivery mechanisms and to improve people's lives represent the primary value proposition for the IoT. The term IoT is used henceforth in this disclosure to include not only the internet of things or objects, but also M2M communications.

Driving this trend is the emergence of various wireless technologies comprising low-cost wireless technologies such as Wi-Fi, ZIGBEE™, Z-WAVE™, etc. and other cellular technology such as 3G and Long Term Evolution (LTE), coupled with a growing proliferation of connected things or IoT devices such as connected consumer electronics, intelligent devices with integrated sensors, devices with actuation capabilities, smartphones, intelligent appliances, etc.

It is also desirable to use a common communication network for connecting IoT devices to their corresponding application servers in the various service provider networks. A typical deployment today consists of using separate or dedicated communication systems/networks to connect IoT devices from local/residential networks to the corresponding application servers offering different services.

An new trend is developing, and it consists of using a common communication network to support all the different IoT devices regardless of the communication interface they support, i.e., the IoT devices may be communicating over any type of access including but not limited to Wi-Fi, ZIGBEE™, Z-WAVE™, or 3G/4G/5G interfaces. According to this model, all the communications from the IoT devices converge to be transported through the common communication network to the various application servers in the corresponding service provider networks. One particularity of such system is that it should be able to cope efficiently with IoT devices changing their service provider network associations.

Indeed, it is common nowadays for a user of a given service to switch service providers when a competitive market exists. When users are confronted with that situation, the new selected service provider will have to re-install and commission its own new IoT devices at the user's premises, or the user will have to purchase a new IoT device. The user may need to pay additional fees, and sometimes deal with the extra burden of familiarizing himself with using the new IoT devices. The previously installed devices are usually decommissioned and returned to the service provider or discarded, which could lead to undesired environmental and economic impact.

Other likely scenario consists of a service provider selling one or more deployed services/applications to another service provider. To support this scenario, the new service provider may replace the IoT devices in the local/residential premises and may additionally update all the routing tables so the data from the new IoT devices is routed to the new service provider. The association between the IoT device and the service provider network is typically treated as a static business association and for many services, that association cannot be changed. The IoT devices used by a service provider network typically have manufacturer-defined IoT device identifiers.

Manufacturer-defined IoT device identifiers come in various formats. A well-known and used manufacturer-defined IoT device identifier is an Extended Unique Identifier (EUI) such as a 48-bit Extended Unique Identifier (EUI-48™) or a 64-bit Extended Unique Identifier (EUI-64™). EUI-48™ and EUI-64™, also referred to as Media Access Control (MAC) addresses that are bound to the hardware of the devices.

In a 48 bit MAC address, the leftmost 24 bits, called "prefix", is used to indicate an organizationally unique identifier (OUI) or a company ID (CID). An OUI is a 24-bit globally unique assigned number referenced by various standards and used to identify an organization/company where a globally unique identifier is needed. A CID, like the OUI, is a unique 24-bit identifier. However a CID cannot be used to generate universally unique MAC addresses. Therefore, the CID is especially applicable in applications where unique MAC addresses are not required. Each company/vendor and organization registers and obtains a CID or an OUI as assigned by the Institute of Electrical and Electronics Engineers (IEEE). One vendor or organization may own many CIDs or OUIs associated with their different products. The rightmost digits of a 48 bit MAC address indicate an identification number as assigned to the device by the vendor or the organization. Devices sharing the same OUI are assigned unique 24-bit identification numbers.

Some networks also use 64 bit MAC addresses, such as ZIGBEE™ networks or networks based on IEEE 802.15.4.

Typically, when a service provider deploys services at a user's residence or at a manufacturing plant, services such as a home automation services, surveillance or smart metering services, the service provider deploys the corresponding IoT devices that enable the services. The IoT devices may have MAC addresses comprising same or different OUI values. If the service provider is changed, its corresponding IoT devices are removed and replaced with other IoT devices provided by the new service provider. Sometimes the user is required to pay additional fees for installation of the new IoT devices. The new IoT devices have different MAC addresses comprising same or different OUI values. Although the OUI values are unique when assigned by the IEEE, the OUI cannot always be used to accurately identify the service provider that is currently providing the service and hence the ability to transport the data from the IoT device to the corresponding application server on the basis of the OUI alone is not sufficient.

When deploying a common communication network for the purpose of connecting all possible IoT devices, a number of challenges will have to be overcome. Some of those challenges include ease of service deployment, dynamic provisioning, dynamic unified identification, addressing and efficient transport of data from all the IoT devices to their associated service provider network. As for the related art, reference can be made to US 8 495 072 B1 and US 2013/0308566 A1. The first of these documents discloses methods and arrangements for generating unique logical ID for objects in a network. The second document (US 2013/0308566 A1) discloses methods for connecting M2M devices to a M2M service provider.

PCT application PCT/IB2014/063785, entitled "data transfer in a System of connected Things" discloses one solution describing a common communication network connecting IoT devices over different wireless technologies to their corresponding application servers in different service provider networks without the IoT device or the common communication network knowing the corresponding application servers. The common communication network in PCT/IB2014/063785 supports different manufacturer IoT device identity format. Each IoT device has its own manufacturer IoT device identity, but the identity cannot be used as a unique IoT device identifier for communication within the common communication network. The common communication network efficiently transports data from an IoT device to the corresponding application server based on a unique IoT device identifier. PCT/IB2014/063785 does not disclose how it adapts to changing service provider network to IoT devices associations.

It would be desirable to provide a scalable system and method that obviate or mitigate the above described challenges.

### SUMMARY

The following acronyms are used throughout this disclosure.

| | |
|---|---|
| • AS | Application Server |
| • CID | Company IDentifier |
| • CCN | Common communication Network |
| • CS | Control Server |
| • EUI | Extended Unique Identifier |
| • IoT | Internet of things |
| • MAC | Media Access Control |
| • OUI | Organizational Unique Identifier |
| • SP | Service Provider |

It is an object of the present invention to obviate or mitigate at least one disadvantage of the prior art and enable flexible and dynamic IoT device to service provider network association thereby dynamically creating and updating unique IoT device identifiers that would comprise the identity of the service provider network, and use the created unique IoT device identifier for IoT device communication over a common communication network such as the network described in PCT application PCT/IB2014/063785.

In accordance with the invention, there are provided methods and apparatuses according to the independent claims. Additional embodiments are set forth in the dependent claims.

According to one embodiment, a device gateway connected to one or more IoT devices obtains an identity of a service provider network associated to an IoT device. If a unique IoT device identifier is not already available at the device gateway then the device gateway creates a unique IoT device identifier by concatenating the identity of the service provider network associated to the IoT device with the manufacturer IoT device identity of the IoT device. If a unique IoT device identifier is already available at the device gateway then the device gateway updates the available unique IoT device identifier by concatenating the newly received identity of the service provider network with the existing manufacturer IoT device identity of the IoT device. Once the unique IoT device identifier is created or updated, the device gateway stores the identifier in its local memory.

According to another embodiment, the device gateway connected to one or more IoT devices determines that an IoT device, for which a manufacturer IoT device is known, has not been preconfigured with a unique IoT device identifier. The device gateway actively obtains the identity of the service provider network by sending a request message to a control server to request the identity of the service provider network associated with the IoT device, the request message comprises the manufacturer device identity. The control server is an entity of a common communication network. Once the device gateway acquires the service provider network identity associated with the IoT device, the device gateway dynamically creates a unique IoT device identifier comprising the acquired service provider network identity and the manufacturer device identity of the IoT device. In another embodiment, the device gateway may create a unique IoT device identifier by appending the service provider network identity, the manufacturer IoT device identity and the access technology type, as the manufacturer IoT device identity format may vary depending on the access technology type in use. The unique IoT device identifier could further be used to establish a path from the device gateway to the corresponding application server in the service provider network, over a common communication network, such as the one described in PCT application PCT/IB2014/063785, without the IoT device and the device gateway knowing the actual destination of the corresponding application server.

In one embodiment, the device gateway triggers the request message to request the service provider network identity associated with the IoT device, only if it receives a message from the IoT device that includes the manufacturer IoT device identity for which a unique IoT device identifier cannot be found.

One embodiment describes the request message as comprising a geographical location of the device gateway, as the device gateway may be a fixed residential gateway. Another embodiment further describes the message as comprising the subscription identity of the device gateway, as the device gateway may be a portable device with a subscription profile that may be maintained in the common telecommunication system or other network. In yet another embodiment, the request message may also comprise the service associated with the IoT device.

According to another embodiment, the device gateway connected to one or more IoT devices obtains an updated identity of the service provider network by receiving unsolicited update message from the control server in the common communication network. The unsolicited update message comprises one or more manufacturer IoT devices identifiers and the associated updated identity of the service provider network. This message will trigger the device gateway to update the corresponding unique IoT device identifiers by updating the identity of the service provider network associated with the one or more manufacturer IoT devices identities or create new unique IoT device identifiers if the one or more manufacturer IoT device identities included in the unsolicited update message are not found in the device gateway.

One other embodiment describes a control server in the common telecommunication network, receiving from a device gateway, a request message requesting an identity of a service provider network associated with an IoT device. The request message comprising the manufacturer IoT device identity. One embodiment describes the request message received at the control server as comprising a parameter describing the service as provided by the IoT device. In another embodiment, the request message may comprise the subscription identity of the device gateway and yet in another embodiment; the request message may comprise a geographical location of the device gateway.

The control server in the common communication network determines from a mapping table, a configured identity of the service provider network associated with the IoT device. The control server may validate the association and in an embodiment it may send a validation message to the service provider network requesting if the stored association is valid. In one embodiment, the validation response message from the service provider network indeed confirms the association with the IoT device, however, another embodiment describes a validation response message that may comprise another service provider network if the service is being provided or managed by another service provider network herein referred to as new service provider network or second service provider network. In the latter scenario, the server may validate the updated association by sending a new validation request to the new service provider network which responds by sending a validation response message that may comprise a confirmation of the updated association. The server may update the stored association in the mapping table when a new service provider network is associated to the IoT device. Assuming that either the service provider network or the new service provider network validates the association; the control server sends a message to the device gateway to signal the identity of the service provider network/new service provider network associated with the IoT device.

Furthermore, according to one embodiment described in this disclosure, the control server may receive an unsolicited message from an authorized service provider network, the unsolicited message comprising updated associations comprising an identity of a new service provider network to be associated with the one or more manufacturer IoT devices identities, in which case, the control server stores the updated associations in the mapping table and a timestamp indicating a date when the updated association is received, hence enabling up-to-date associations to be available at the mapping table. The control server may notify the one or more device gateways with the updated associations, to trigger the device gateway to create or update the corresponding one or more unique IoT device identifiers.

### BRIEF DESCRIPTION OF THE DRAWINGS

Embodiments of the present invention will now be described, by way of example only, with reference to the attached Figures, wherein:
Figure 1 is a schematic illustration of an overview of a system for connecting IoT devices through a common communication network to one or more service provider networks, according to an embodiment.
Figure 2 illustrates a sequence diagram for acquiring a service provider network associated with a device gateway and creating a unique IoT device identifier, according to an embodiment.
Figure 3 illustrates a sequence diagram for receiving unsolicited messages to update IoT device to service provider network association, according to an embodiment.
Figure 4a illustrates a flowchart of a method executed at a device gateway, for creating and updating the unique IoT device identifier, according to an exemplary embodiment.
Figure 4b illustrates a flowchart of a method executed at a device gateway, requesting an identity of the service provider network associated with an IoT device to create the unique IoT device identifier, according to an exemplary embodiment.
Figure 4c illustrates a flowchart of a method executed at a device gateway unsolicitedly obtaining an identity of the service provider network associated with an IoT device to update or create the unique IoT device identifier, according to an exemplary embodiment.
Figure 5 illustrates a flowchart of a method executed at a server in the common communication network, providing an identity of the service provider network associated with the IoT device, according to an exemplary embodiment.
Figure 6 illustrates a flowchart of a method executed at a server in the common communication network, receiving unsolicited message comprising updated IoT device to service provider network association, according to an exemplary embodiment.
Figure 7 is a schematic illustration of a device gateway, according to an embodiment.
Figure 8 is a schematic illustration of the server in the common telecommunication network, according to an embodiment.
Figure 9 is a schematic illustration of a device gateway, according to another embodiment.

### DETAILED DESCRIPTION

The various features of the invention will now be described with reference to the figures. These various aspects are described hereafter in greater detail in connection with exemplary embodiments and examples to facilitate an understanding of the invention, but should not be construed as limited to these embodiments. Rather, these embodiments are provided so that the disclosure will be thorough and complete, and will fully convey the scope of the invention to those skilled in the art.

Many aspects of the invention are described in terms of sequences of actions or functions to be performed by elements of a computer system or other hardware capable of executing programmed instructions. It will be recognized that the various actions could be performed by specialized circuits, by program instructions being executed by one or more processors, or by a combination of both. Moreover, the invention can additionally be considered to be embodied entirely within any form of computer readable carrier or carrier wave containing an appropriate set of computer instructions that would cause a processor to carry out the techniques described herein.

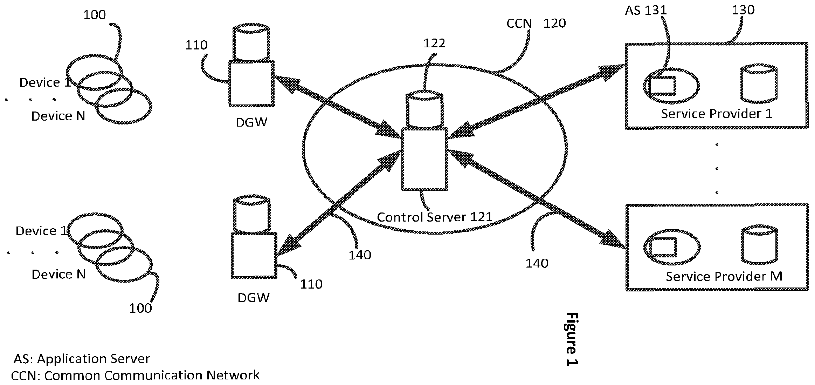

Figure 1 is a schematic illustration of a system for connecting IoT devices 100 to application servers 131 in the respective service provider networks 130; more specifically, the system comprises one or more IoT devices 100 connected to one or more device gateways 110, a control server 121 of a common communication network 120, and one or more service provider networks 130 hosting the corresponding application servers 131. A device gateway 110 is connected to a control server 121, over a communication interface 140. The control server 121 of the common communication network 120 communicates with various service provider networks 130 over other communication interfaces 140. The common communication network 120 enables transport of data from an IoT device 100 to an application server 131 in the service provider network 130 based on a unique IoT device identifier. An example of a common communication network 120 is disclosed in PCT application PCT/IB2014/063785. Although the unique IoT device identifier comprising the manufacturer device identity can be pre-configured in the device gateway, this disclosure describes methods and apparatuses for dynamically updating and creating the unique IoT device identifiers, enabling flexible and dynamic association of the IoT device to a service provider network 130. The device gateway 110 preferably includes a storage that maintains the manufacturer IoT device identities and the created/updated unique IoT device identifiers for the IoT devices 100 connected to the device gateway 110 via various interfaces and access technology types such as Wi-Fi, ZIGBEE™, Z-WAVE™, 3G/4G/5G interfaces, etc. The device gateway 110 may be pre-configured with the manufacturer IoT device identifiers of the IoT devices it is connected to. Alternatively, the device gateway 110 may discover the IoT devices 100 and learn the corresponding manufacturer IoT device identities via any discovery mechanisms enabled by the access technology supported by the IoT devices. Once discovered, the device gateway 110 populates its storage with the manufacturer IoT device identities. Since the IoT devices 100 connected to a device gateway 110 are not necessarily of the same access technology type, the manufacturer IoT device identities may be of different types and formats. The so-created unique IoT device identifier for an IoT device 100 may comprise the manufacturer IoT device identity, the identity of the associated service provider network 130 and may further comprise the access technology type. The unique IoT device identifier is further used by the device gateway 110 to request a virtual data path as disclosed in PCT application PCT/IB2014/063785.

The device gateway 110 in Figure 1 is configured to send a request message for an identity of a service provider network 130 associated to an IoT device 100 for the purpose of creating the unique IoT device identifier for the IoT device. The device gateway 110 is additionally configured to receive unsolicited update messages from the control server 121 in the common communication network 120. The unsolicited update message comprises an updated association between an identity of a new service provider network 130 and an IoT device 100 for the purpose of updating or creating a unique IoT device identifier for the IoT device 100.

A local or external storage in the common communication network 120 is used to hold a mapping table 122. The mapping table 122 is used to maintain the associations between the manufacturer IoT device identities and the identities of the associated service provider networks 130. Each association may also include a timestamp indicating the time when the association has been created or updated. The timestamp may be used by the control server 121 to determine if it needs to contact the service provider network 130 to validate a requested association. In other words, if the timestamp indicates that the association is recently updated/created, the control server 121 validates the association without further verification with the service provider network 130; else the control server 121 requests the service provider network 130 obtained from the mapping table 122 to validate an association. This flexibility allows the common communication network 120 to control and optimize the signaling load to the service provider networks 130.

The associations in the mapping table 122 are pre-configured, however, this disclosure presents embodiments where the associations are dynamically updated. The associations could be updated as a result of processing at the control server 121, a request message from a device gateway 110, requesting an identity of a service provider network 130 associated to the IoT device 100. The control server 121 retrieves from the mapping table 122 the stored identity of the service provider network 130 associated to the IoT device. As the control server 121 validates the association with the service provider network, the latter identifies instead another service provider network that is associated with the IoT device. Following a subsequent validation with the other service provider network, the control server 121 may subsequently update the association in the mapping table 122. Moreover, the associations could also be updated if the control server 121 receives unsolicited message comprising updated association between an identity of a service provider network and one or more manufacturer IoT device identity. The service provider network sending the unsolicited message may be either
a) the service provider network 130 from the current stored association in the mapping table 122, which indicates an identity of a new service provider network for the corresponding IoT device(s), or
b) the new service provider network itself sending the unsolicited association update identifying its own identity and the associated IoT device(s). However, in order to receive and accept unsolicited association update from a new service provider that does not exist in the current mapping table, it may be necessary to execute authorization/authentication mechanisms between the common communication network 120 and the new service provider network.

Once the unsolicited message is received and accepted, the control server 121 updates the corresponding association in the mapping table 122 and stores the updated associations. In one embodiment, the control server 121 may send to the device gateway 110 the identity of the new service provider network associated with the one or more manufacturer IoT device identity of the IoT devices 100 connected to the device gateway 110. Alternatively the control server 121 may create an updated unique IoT device identifier by concatenating the identity of the new service provider network and the manufacturer IoT device identity for the one or more IoT devices affected by the received updated associations and sends the identifiers to the device gateway 110.

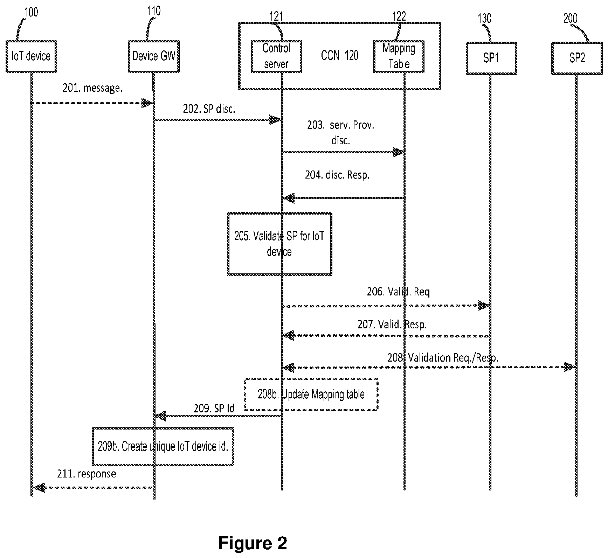

Figure 2 illustrates a detailed sequence diagram based on the system illustrated in Figure 1, for creating a unique IoT device identifier at the device gateway 110 according to one embodiment. The system comprises an IoT device 100 connected to a device gateway 110. The device gateway 110 communicates with a control server 121 in the common communication network 120, which also comprises a mapping table 122 that maintains associations comprising identities of the service provider networks and the IoT devices. The system further illustrates a first service provider network 130, and a second service provider network 200. In step 202, the device gateway 110 sends a request message to a control server 121 of the common communication network 120, requesting an identity of a service provider network associated with an IoT device 100, the request message comprises the manufacturer IoT device identity. The device gateway 110 initiates the request message on its own, after determining that a manufacturer IoT device identity in the local storage does not have a corresponding unique IoT device identifier. The device gateway 110 may alternatively trigger the request message for an identity of a service provider network upon receiving a message, step 201, or data from an IoT device 100. The message from the IoT device in step 201may consist of a discovery message from an IoT device 100 over the access interfaces connecting the IoT device 100 to the device gateway 110. The discovery message in step 201 may comprise the manufacturer IoT device identity. Alternatively, the message in step 201 may be an explicit request for an identity of a service provider network or for a unique IoT device identifier from the IoT device 100, assuming the IoT device is capable of supporting the unique IoT device identifier in addition to the manufacturer IoT device identity. Following optional step 201, the device gateway 110 may determine that a unique IoT device identifier is not found in the device gateway storage and triggers a request message for an identity of a service provider network.

In one embodiment, the request message in step 202 may comprise the subscription identity of the device gateway 110. The subscription identity of the device gateway 110 may be used in for example situation where the device gateway 110 is a portable device (e.g., smartphone, tablet, etc.). The subscription profile may be stored in the mapping table 122 or in another external database (not shown in Figure 2). When a subscription identity of the device gateway 110 is included in the request message, the control server 121 and optionally the first service provider network 130 may use the device gateway subscription profile in the validation of the IoT device to service provider network association and may also be used to prevent any malicious requests from unauthorized device gateways.

Another embodiment describes the request message in step 202, as comprising the geo-location of the device gateway, which is particularly useful in the case the device gateway 110 is a fixed residential gateway. The control server 121 and optionally the first and second service provider networks 130, 200 may use the device gateway geo-location in the validation of the IoT device to service provider network association and may also be used to prevent any malicious requests from unauthorized device gateways. Another embodiment is included which describes the request message in step 202, as comprising the service type provided or enabled by the IoT device for which an identity of the service provider network is requested.

In step 203, the control server 121 sends a message to a mapping table 122 to request the available identity of a first service provider network 130 associated with the IoT device 100. The message in step 203, includes the manufacturer IoT device identity and may include the service type associated to the IoT device 200 and may additionally comprise the device gateway subscription profile and/or the device gateway geo-location. If an identity of a service provider network 130 is found, the mapping table 122, in step 204, returns the identity of the first service provider network 130 and may include a timestamp determining the time of creation or of last update of the association. The control server 121validates the received identity of the service provider network 130. If a timestamp is included in step 204, and the time indicates a very recent creation or update of the available association, then based on the local network policies, the control server 121 determines that the available association is valid and sends a message in step 209 to the device gateway 110, to signal the identity of the first service provider network 130 associated with the IoT device 100. Alternatively, if in step 204, the mapping table 122, returns an identity of a first service provider network 130 but the control server 121 determines that the service provider should validate the association, then the control server 121 in step 206, sends a validation request message to the first service provider network 130. The validation request message comprises the manufacturer IoT device identity, and may include the service type, an optional device gateway subscription identity and an optional device gateway geo-location.

If the first service provider network 130 successfully validates the association in its internal database, it sends in step 207 a validation response message back to the control server 121 confirming the association. The control server 121 then sends in step 209, the identity of the first service provider network 130 associated with the IoT device 100. In an alternative embodiment, if the first service provider network 130 determines that the IoT device is in fact associated to a second service provider network 200 and the identity of the second service provider network 200 is available in the internal database at the first service provider network 130, the first service provider network 130 sends a validation response message in step 207 to the control server 121 comprising the identity of the second service provider network 200. The control server 121 may in step 208, validate the new IoT device association with the second service provider network 200 by repeating step 206 with the second service provider network 200. This may require executing an authentication procedure between the control server 121 and the second service provider network 200 prior to validating the new association. Although, the authentication process is not shown in Figure 2, a person skilled in the art understands that any existing authentication mechanism may be used between the control server 121 and the second service provider network 200. If the second service provider network 200 validates successfully the new association, it returns a message confirming the new association.

Following optional step 208, in Figure 2, if the second service provider network 200 validates the new IoT device association, the control server 121 sends in step 209, the identity of the second service provider 200 to the device gateway 110. In an alternative embodiment, the control server 121 may in step 208b update the mapping table 122 with the identity of the second service provider network 200 associated with the IoT device 100.

When the device gateway 110 in step 209, receives an identity of a service provider network (either of a first or second service provider network) associated with the IoT device, the device gateway 110 in step 209b, creates and stores a unique IoT device identifier comprising the identity of the service provider network, the manufacturer IoT device identity and optionally the access technology type used by the IoT device.

Although the embodiment describes the device gateway 110 requesting an identity of a service provider network to create a unique IoT device identifier, other variations of Figure 2 are possible, such as the device gateway 110 may instead request the unique IoT device identifier from the control server 121, in which case the control server 121 creates and sends the unique IoT device identifier to the device gateway 110 later on at step 209b.
The device gateway 110 would then store the received unique IoT device identifier and the control server 121 may also store the unique IoT device identifier in the mapping table 122.

If the request message in step 202 is triggered by a request from the IoT device 100 for a unique IoT device identifier or for an identity of a service provider network , the device gateway 110 sends in step 211 a response message back to the IoT device 100, the response message in step 211 may then comprise the unique IoT device identifier created by the device gateway 110 or the received identity of the service provider network, in which case the IoT device creates and stores the unique IoT device identifier.

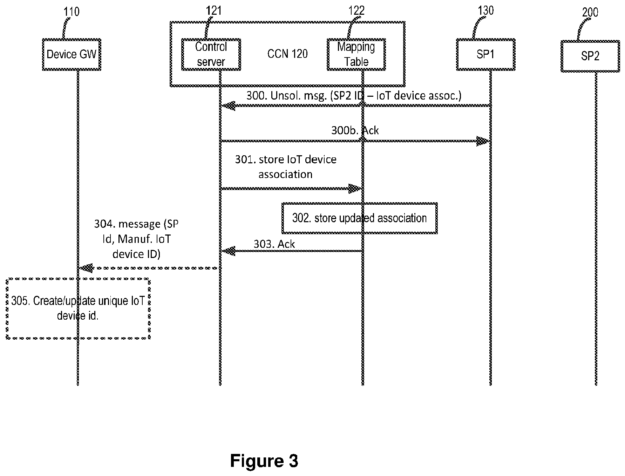

Figure 3 illustrates a mechanism for updating the service provider network to IoT device associations stored in the mapping table 122 in the common communication network 120, according to one embodiment. The mechanism is based on receiving at the common communication network 120, an unsolicited message from a service provider network, the unsolicited message comprises updated associations between the identity of the service provider network and one or more manufacturer IoT devices identities . This is particularly useful when a user swaps a service provider for a specific service or if a deployed service is managed by a new service provider as a result of spin-off or out-sourcing. The unsolicited message comprising updated associations may be triggered from the first service provider network 130 known in the current association stored in the mapping table 122, or may be triggered by a new service provider network 200 with which the IoT device 100 is now associated. The new service provider network 200 is also referred to as the second service provider network 200. When triggered by the new service provider network 200, a person skilled in the art understands that the common communication network 120 and the new service provider network 200 should communicate over a secure connection. Figure 3 shows the option where the unsolicited message is triggered by the first service provider network 130 as per the current stored association in the mapping table 122.

In step 300, the first service provider network 130 sends to the control server 121 in the common communication network 120, an unsolicited message for one or more IoT devices that are now being served by the second service provider network 200. The unsolicited message in step 300 comprises one or more updated associations consisting of the identity of the second service provider network 200 and one or more manufacturer IoT devices identities for which the associations should be updated. The unsolicited message may also include the one or more device gateway identities to which the one or more IoT devices, identified by their manufacturer IoT devices identities, are connected. Moreover, the unsolicited message may also include the service type associated to the IoT devices. When the control server 121 receives the unsolicited message comprising one or more updated associations, it responds in step 300b with an acknowledgement back to the first service provider network 130 indicating that it accepts the message. The control server 121 sends, in step 301, a message to the mapping table 122 to update the corresponding one or more associations. The message in step 301 comprises a timestamp indicating the time the updated associations are received, and the updated associations as received in the unsolicited message in step 300, i.e., the identity of the service provider network and the one or more manufacturer IoT devices identities, etc. The mapping table 122 stores the updated associations and sends in step 303 an acknowledgement back to the control server 122, the acknowledgement in step 303 may be sent immediately in response to the message received in step 301. An alternative embodiment is described where the control server 122 further sends a message in step 304 to a device gateway 110, the message comprising the identity of the second service provider network 200 and the associated one or more manufacturer IoT devices identities that are comprised in the received updated associations. If the concerned IoT devices are connected to different device gateways, the control server 121 may send a message to each of the corresponding device gateways 110. The device gateway 110 in step 305, updates or creates and stores the corresponding unique IoT devices identifiers. In an alternative embodiment for step 304, the control server 121 may create unique IoT devices identifiers and include the identifiers in step 304, which are then stored in the device gateway 110. It is also understood that the unsolicited message received at step 300 may comprise one or more updated associations between one or more manufacturer IoT devices identities and one or more service provider networks identities.

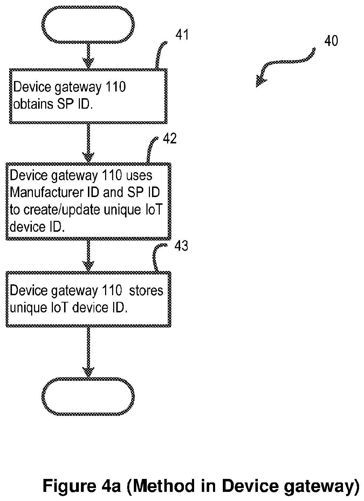

Figure 4a shows a flowchart of a method 40 executed at a device gateway 110 for creating unique IoT device identifiers, according to one embodiment. The device gateway 110 is the same device gateway illustrated in the previous figures. The method 40 comprises step 41 of obtaining or receiving at the device gateway 110, an identity of a service provider network associated to an IoT device. The identity of the service provider network may be obtained from the control server 121 in the common communication network 120. In step 42, the device gateway 110 creates or updates the unique IoT device identifier for the IoT device, the identifier comprising a concatenation of the obtained/received identity of the service provider network, the manufacturer IoT device identity available at the device gateway 110 and may comprise the access technology type supported by the IoT device. The manufacturer IoT device identity corresponds to the hardware related identity of the IoT device connected to the device gateway 110. The manufacturer IoT device identity is stored and known in the device gateway 110, and is either pre-configured in the device gateway 110 or known through a discovery mechanism between the device gateway 110 and the IoT device. Once the device gateway 110 creates the unique IoT device identifier for an IoT device, the device gateway 11, in step 43 stores the created/updated unique IoT device identifier in its local storage.

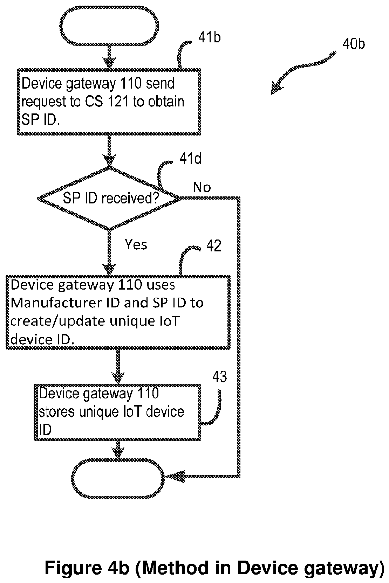

Figure 4b shows a flowchart of a method 40b executed at a device gateway 110 for creating unique IoT device identifiers, according to one embodiment. The method 40b is a variation of method 40 and comprises step 41b, where the device gateway 110 obtains the identity of the service provider network by sending a request message to a control server 121 of the common communication network 120 requesting an identity of a service provider network associated to an IoT device. The request message comprises the manufacturer IoT device identity and may comprise the subscription identity of the device gateway and/or the geo-location of the device gateway. The device gateway initiates the request message on its own, after determining that a manufacturer IoT device identity in the local storage does not have a corresponding unique IoT device identifier. The device gateway may alternatively trigger the request message for an identity of a service provider network upon receiving a message or data from an IoT device. In step 41d, the device gateway receives a response to the request message sent in step 41b. If the response from the control server 121 does not include an identity of a service provider network, the device gateway ends the process, and if at step 41d, an identity of a service provider network is included in the response, the device gateway executes step 42 and step 43 in the same manner as method 40 above.

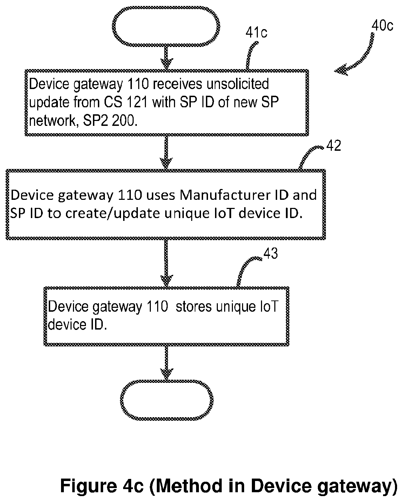

Figure 4c shows a flowchart of a method 40c executed at a device gateway 110 for creating or updating unique IoT device identifiers, according to one embodiment. The method 40c is a variation of method 40 and comprises step 41c, where the device gateway 110 obtains the identity of a service provider network by receiving unsolicited update message from the control server 121 of the common communication network 120, where the update message comprises an identity of new a service provider network 200 associated to an IoT device. The unsolicited update message comprises a manufacturer IoT device identity, an identity of a new service provider network 200. If a unique IoT device identifier for the IoT device is already stored at the device gateway 110, the device gateway 110, in step 42 updates the unique IoT device identifier (consisting of a concatenation of identity of service provider network, manufacturer IoT device identity and optional access technology type used with the IoT device) by replacing the identity of the service provider network with the received identity of the new service provider network 200. If a unique IoT device identifier for the IoT device is not available at the device gateway 110, the device gateway 110, upon receiving the unsolicited update message, in step 42 creates the unique IoT device identifier by concatenating the received identity of the new service provider network, manufacturer IoT device identity and optional access technology type used with the IoT device. The device gateway 110 executes step 43 and stores the updated or created unique IoT device identifier. In one embodiment, the unsolicited update message may trigger an update or creation of one or more unique IoT device identifiers at the device gateway 110, in which case the message may comprise in addition to the identity of the service provider network a list of the affected IoT devices for which the unique IoT device identifiers should be updated or created. It should be noted that more than one identity of service provider network may be received. Each identity of service provider network is associated with one or more IoT devices.

In yet an alternative embodiment, the device gateway 110 may not recognize the manufacturer IoT device identity received in the unsolicited update message as it is not available in the device gateway local storage, in which case the device gateway 110 may create and store a new entry for a new IoT device. This scenario is useful for newly installed IoT devices 100 that the device gateway 110 is not yet aware of. The device gateway 110 stores the manufacturer IoT device identifier and the created unique IoT device identifier.

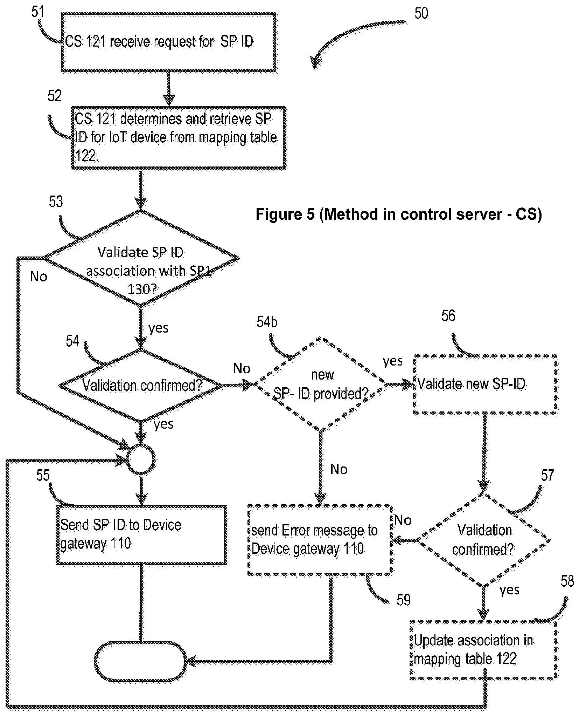

Figure 5 shows a flowchart of a method 50, according to an embodiment, the method 50 executed at a control server 121 in a common communication network 120. The method 50 comprises steps for providing in response to a request from a device gateway 110, a valid identity of a service provider network associated to an IoT device. The method 50 comprises step 51 of receiving a request message from a device gateway 110 requesting an identity for a service provider network associated to an IoT device. The request message comprises the manufacturer IoT device identity, and may include the service type, an optional device gateway subscription identity and an optional device gateway geo-location. Method 50 further comprises step 52 where the control server 121 determines the requested identity of the service provider network by sending a request to a mapping table 122 to request the available identity of a service provider network associated to the IoT device. If an identity of a service provider network is found, herein referred to as first service provider network 130, the mapping table 122 returns the identity of the first service provider network 130 and may include a timestamp determining the time of creation or of the last update executed for the association. The control server 121 in step 53 of method 50 validates the received identity of the first service provider network 130. If a timestamp is included in step 52, and the time indicates that the first service provider network 130 to IoT device association is recent (e.g., association is last updated/created 4 hours ago) then based on local network policies, the control server 121 may determine in step 53 that the association is valid and starts executing step 55 where the control server 121 sends a message to the device gateway 122, where the message includes the identity of the first service provider network 130 associated with the IoT device as retrieved from the mapping table 122. Back to step 53, the control server 121 may determine that the retrieved identity of the first service provider network 130 from the mapping table 122 should be validated by the first service provider network 130. Consequently, the control server 121sends a validation request message to the first service provider network 130, where it includes the manufacturer IoT device identity, an optional service type, an optional device gateway subscription identity and an optional device gateway geo-location. In step 54, the first service provider network 130 sends a validation response to the control server 121. If the validation response confirms the association of the IoT device with the first service provider network 130, the control server 121executes step 55, where it sends a message to the device gateway 110 and includes the validated identity of the first service provider network 130 associated with the IoT device. Optional step 54b of method 50 indicates that the first service provider network 130 may fail in validating the association because the IoT device is no longer associated with the first service provider network 130; however, the first service provider network 130 is aware of the identity of the new service provider network 200 that is now associated with the IoT device, herein referred to as second service provider network 200. The first service provider network 130 sends a validation response message back to the control server 121 and includes the identity of the second service provider network 200 associated with the IoT device. The control server 121 may execute step 56, where it proceeds to validate the IoT device association with the second service provider network 200. This may require an authentication process between the control server 121 and the second service provider network 200 prior to validating the new association. If in step 57, the second service provider network 200 validates successfully the new association, and sends a validation response message accordingly to the control server 121, the control server 121 proceeds with executing step 55 and sends a message to the device gateway 110 where it includes the identity of the second service provider network 200 now associated with the IoT device. The control server 121 may furthermore execute optional step 58, where upon receiving a validation response from the second service provider network 200 confirming the new association, the control server 121 may update the association in the mapping table 122 in the common communication network 120. On the other hand, if in step 57 the second service provider network 200 fails in validating the new association, the control server 121 executes step 59 where it sends an error message to the device gateway 110 in response to the request message received during step 51 of the method.

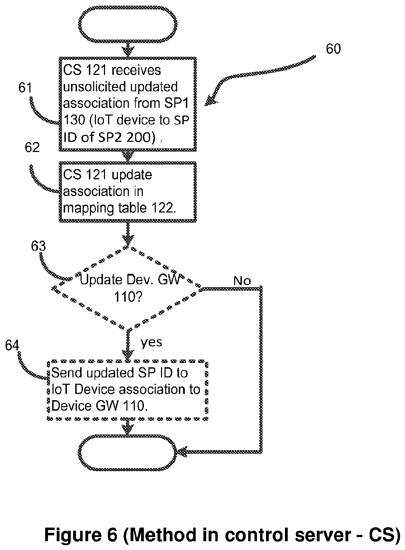

Figure 6 shows a flowchart of a method 60 executed at a control server 121of a common communication network 120, for updating and maintaining up-to-date associations stored in the mapping table 122 in the common communication network 120 according to an embodiment. In method 60, the control server 121 manages updated associations received from a first service provider network 130. The method 60 results in updating and maintaining up-to-date associations between the identities of the service provider networks and the one or more manufacturer IoT devices identities of the IoT devices as stored in the mapping table 122. Method 60 is particularly useful when a service provider associated to one or more IoT devices is changed for a service, or device gateways, hence affecting the service provider network identity to manufacturer IoT devices identities associations of the one or more IoT devices maintained in the common communication network 121. Step 61 shows the control server 121 receiving an unsolicited message comprising updated associations from a first service provider network 130. The unsolicited message comprises the identity of a new service provider network 200, herein referred to as second service provider network 200, and the one or more affected manufacturer IoT devices identities. The unsolicited message may also include the one or more device gateway identities to which the one or more IoT devices identified by the one or more manufacturer IoT devices identities are connected and may further include the service type associated with the one or more IoT devices. In step 62, the control server 121 sends a message to the mapping table 122 to update the corresponding one or more associations and store the updated associations. The message from the control server 121 to the mapping table 122 comprises the same information received in the unsolicited message from the first service provider network 130. The optional step 63, enables the control server 121 to determine if it should send the identity of the second service provider network 200 to the corresponding device gateway(s) 110. The control server 121 may use local operator policies and/or network conditions to determine if the device gateway(s) 110 should also be updated. If the control server 121 determines that it should update the device gateway, it executes step 64, where it sends a message to the device gateway 110 and includes the identity of the second service provider network 200 and the affected one or more manufacturer IoT devices identities. The device gateway 110 uses the information to create or update the one or more unique IoT devices identifiers as described in method 40c above. If the affected IoT devices are connected to different device gateways, the control server 121 sends a message to each device gateway 110.

An alternative embodiment, not shown in Figure 6 consists of a capability where when receiving from the first service provider network 130 the updated associations between the identity of the service provider and the one or more manufacturer IoT devices identities, the control server 121 can create/update the one or more unique IoT devices identifiers and could send a message comprising the one or more created/updated IoT devices identifiers to each affected device gateways 110. In this case, the device gateways 110 would only need to store the received one or more unique IoT devices identifiers.

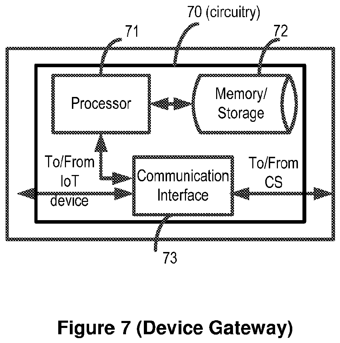

In one embodiment illustrated in Figure 7, a device gateway comprises a circuitry 70 which executes the method steps according to the embodiments as described in Figure 4a, Figure 4b and Figure 4c, along with steps 201, 202, 209, 209b and 211 of Figure 2 and steps 304 and 305 of Figure 3 in addition to other embodiments described herein. In one embodiment, the circuitry 70 may comprise a processor 71 and a storage 72 (also referred to as memory) containing instructions, which when executed, cause the processor 70 to perform the steps in a method according to embodiments described herein. The circuitry 70 may further comprise a communication interface 73 to communicate with external entities such as IoT devices and the server in the network of interconnect end-points.

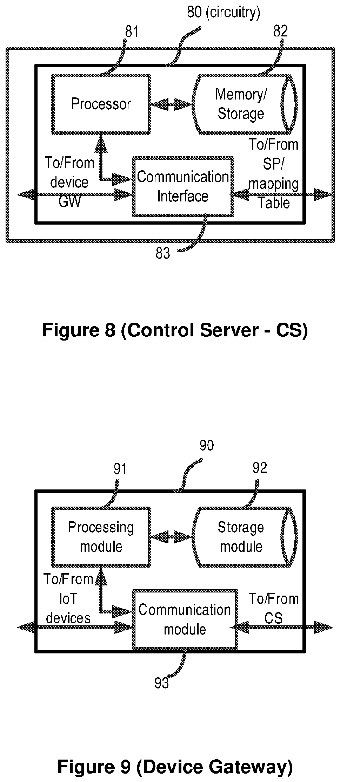

In another embodiment illustrated in Figure 8, a control server in the common communication network comprises a circuitry 80 which executes the method steps according to the embodiments as described in Figure 5 and Figure 6 along with steps 202-208, 208b and 209 of Figure 2 and steps 300, 300b, 301-304 in Figure 3. In one embodiment, the circuitry 80 may comprise a processor 81 and a storage 82 (also referred to as memory) containing instructions, which when executed, cause the processor 81 to perform the steps in a method according to embodiments described herein. The circuitry 80 may further comprise a communication interface 83 to communicate with external entities which may comprise external service provider networks, device gateways and mapping table if not co-located with the server.

Figure 9 illustrates an exemplary embodiment of a device gateway comprising a processing module 91 to obtain through a communication module 93, the identity of the service provider network associated to a manufacturer IoT device identity of the IoT device. Once the identity of the service provider network is obtained, the processing module 91 determines if the unique IoT device identifier is available in the storage module 92. If the unique IoT device identifier is not available, the processing module 91 creates the unique IoT device identifier comprising a concatenation of the identity of the service provider network and the manufacturer IoT device identity. If the unique IoT device identifier is available in the storage module 92, the processing module 91 retrieves the unique IoT device identifier from the storage module 92 and updates the unique IoT device identifier comprising a concatenation of the identity of the service provider network and the manufacturer IoT device identity. The processing module 92 stores the unique IoT device identifier in the storage module 92. The storage module 92 maintains IoT devices information comprising the manufacturer IoT device identity and the unique IoT device identifier provided by the processing module 91 for all the IoT devices connected to the device gateway.

A person skilled in the art would understand that the modules can be implemented as a computer program running on a processor and that the modules are operative to execute the steps of the previously described method.

The invention has been described with reference to particular embodiments. However, it will be readily apparent to those skilled in the art that it is possible to embody the invention in specific forms other than those of the embodiments described above. The described embodiments are merely illustrative and should not be considered restrictive in any way. The scope of the invention is given by the appended claims, rather than the preceding description.

## Claims

1. A method in a device gateway (110) for dynamically creating (209) and updating (305) a unique Internet of Thing, IoT, device identifier, the method comprising:
- obtaining an identity of a service provider network (41) associated to a manufacturer IoT device identity of the IoT device (100);
- if the unique IoT device identifier is not already available, creating (209) the unique IoT device identifier comprising a concatenation of the identity of the service provider network (130) and the manufacturer IoT device identity;
- if the unique IoT device identifier is already available, updating (305) the identity of the service provider network (130) of the unique IoT device identifier; and
- storing the unique IoT device identifier.

2. The method of claim 1, wherein the step of obtaining (41) further comprises
- sending a request message (202), optionally upon receiving one of a message and data from the IoT device (201), to obtain the identity of the service provider network (41) associated with the IoT device (100), the request message (202) comprising the manufacturer IoT device identity; and
- receiving a message (209) comprising the identity of the service provider network (130) associated with the manufacturer IoT device identity.

3. The method of claim 2, wherein the request message (202) comprises geographical location of the device gateway (110); or
wherein the request message (202) comprises a subscription identity of the device gateway (110); or
wherein the request message (202) comprises a service associated with the IoT device (100).

4. The method of claim 1, wherein the step of obtaining (41) further comprises
- receiving an unsolicited update message (300) comprising the identity of the service provider network (130) and the manufacturer IoT device identity to trigger the device gateway (110) to update (305) or create (209) the unique IoT device identifier; or
wherein the unique IoT device identifier comprises the manufacturer IoT device identity, the identity of the service provider network (130) and the access technology type used between the device gateway (110) and the IoT device (100).

5. A method in a server of a network (121) for providing to a device gateway (110) an identity of a service provider network (130) associated with an Internet of Thing, IoT, device (100) connected to the device gateway (110) for the purpose of creating (209) a unique IoT device identifier, the method comprising:
- receiving a request message (202) from the device gateway (110) for obtaining the identity of the service provider network (41) associated with the IoT device (100), the request message (202) comprising a manufacturer IoT device identity;
- determining an association between the identity of the service provider network (130) and the manufacturer IoT device identity; and
- validating the association (205), and conditional to a successful validation (205) sending a message to the device gateway (304) for creating (209) the unique IoT device identifier, the message comprising the identity of the service provider network (130) and the manufacturer IoT device identity.

6. The method of claim 5, wherein the request message (202) comprises a subscription identity of the device gateway (110); or
wherein the request message (202) comprises a geographical location of the device gateway (110); or
wherein the request message (202) comprises a service associated with the IoT device (100).

7. The method of claim 5, wherein the step of validating the association (205) of the IoT device (100) further comprises
- sending a validation message (206) to the service provider network (130), the validation message (206) comprising the manufacturer IoT device identity of the IoT device (100); and
- receiving a validation response (207);
wherein, as on option, the validation response (207) validates the association (205) comprising the manufacturer IoT device identity and the identity of the service provider network (130); or
wherein, as an option, the validation response (207) comprises an identity of a new service provider network (200) associated to the manufacturer IoT device identity; wherein, as on option,
responsive to receiving the validation response (207), the method further comprises
- sending a second validation request (206) to the new service provider network (200); and
- receiving a second validation response (208) message confirming an updated association comprising the manufacturer IoT device identity and the identity of the new service provider network (200).

8. The method of claim 5, wherein the method further comprises
- receiving an unsolicited message (300) comprising updated associations between one or more manufacturer IoT devices identities and the identity of a new service provider network (200) associated therewith; and
- storing the updated associations (302).

9. A method in a server of a network for updating associations (305) between a service provider network (130) and one or more Internet of Thing, IoT, devices (100), the method comprising:
- receiving an unsolicited message (300) comprising one or more updated associations between the one or more manufacturer IoT devices identities and an identity of a new service provider network (200);
- storing the updated associations (302); and
- sending to one or more device gateways (110) a message (304) comprising the one or more manufacturer IoT devices identities and the identity of the new service provider network (200) for updating (305) corresponding one or more unique IoT devices identifiers.

10. A computer program, comprising instructions which, when executed on at least one processor, cause the at least one processor to carry out the method according to any one of claims 1 to 9.

11. A device gateway (110) configured to dynamically create (209) or update (305) a unique Internet of Thing ,IoT , device identifier, the device gateway (110) comprising a circuitry (70) configured to:
- obtain an identity of a service provider network (41) associated to a manufacturer IoT device identity of the IoT device (100);
- if the unique IoT device identifier is not already available, create (209) the unique IoT device identifier comprising a concatenation of the identity of the service provider network (130) and the manufacturer IoT device identity;
- if the unique IoT device identifier is already available, update (305) the identity of the service provider network (130) of the unique IoT device identifier; and
- store the unique IoT device identifier.

12. A server in a network, configured to provide an identity of a service provider network (130) associated with an Internet of Thing, IoT, device (100) connected to a device gateway (110), the server comprising a circuitry (80) configured to:
- receive a request message (202) from the device gateway (110) for obtaining the identity of the service provider network (41) associated with the IoT device (100), the request message (202) comprising a manufacturer IoT device identity;
- determine an association between the identity of the service provider network (130) and the manufacturer IoT device identity; and
- validate the association (205), and conditional to a successful validation (205) sending a message to the device gateway (304) for creating (209) the unique IoT device identifier, the message comprising the identity of the service provider network (130) and the manufacturer IoT device identity.

13. The server of claim 12, wherein to validate the association (205) of the IoT device (100), the circuitry (80) is further configured to
- send a validation message (206) to the service provider network (130); and
- receive a validation response (207);
wherein, as an option, the validation response (207) confirms the association of the IoT device (100) with the identity of the service provider network (130); or
wherein the validation response (207) includes the identity of a new service provider network (200); and
wherein, as an option, the circuitry (80) is further configured to
- send a second validation request (206) to the new service provider network (200); and
- receive a second validation response (208) confirming an updated association comprising the manufacturer IoT device identity and the identity of the new service provider network (200).

14. The server of claim 12, wherein the circuitry (80) is further configured to
- receive an unsolicited message (300) comprising one or more updated associations between one or more manufacturer IoT devices identities and the identity of a new service provider network (200); and
- store the updated associations (302).

15. A device gateway (110) configured to dynamically create (209) and update (305) a unique Internet of Things , IoT, device identifier for an IoT device (100), the device gateway (110) comprising:
- a processing module (91) configured to
- obtain through a communication module (93), an identity of a service provider network (41) associated to a manufacturer IoT device identity of the IoT device (100);
- if the unique IoT device identifier is not already available, create (209) the unique IoT device identifier comprising a concatenation of the identity of the service provider network (130) and the manufacturer IoT device identity;
- if the unique IoT device identifier is already available, retrieve the unique IoT device identifier from a storage module (92) and update (305) the identity of the service provider network (130) of the unique IoT device identifier; and
- store the unique IoT device identifier in the storage module (92);
- the storage module (92) configured to
- maintain IoT device information comprising the manufacturer IoT device identity and the unique IoT device identifier provided by the processing module (91);
- the communication module (93) configured to
- obtain the identity of the service provider network (41).

## Patentansprüche

1. Verfahren in einem Vorrichtungs-Gateway (110) zum dynamischen Kreieren (209) und Aktualisieren (305) einer einzigartigen Internet der Dinge-, IoT, Vorrichtungskennung, das Verfahren umfassend:
- Erhalten einer Identität eines Dienstanbieternetzwerks (41), das mit einer Hersteller-IoT-Vorrichtungsidentität der IoT-Vorrichtung (100) verknüpft ist;
- falls die einzigartige IoT-Vorrichtungskennung nicht bereits verfügbar ist, Kreieren (209) der einzigartigen IoT-Vorrichtungskennung, umfassend eine Verkettung der Identität des Dienstanbieternetzwerks (130) und der Hersteller-IoT-Vorrichtungsidentität;
- falls die einzigartige IoT-Vorrichtungskennung bereits verfügbar ist, Aktualisieren (305) der Identität des Dienstanbieternetzwerks (130) der einzigartigen IoT-Vorrichtungskennung; und
- Speichern der einzigartigen IoT-Vorrichtungskennung.

2. Verfahren nach Anspruch 1, wobei der Schritt zum Erhalten (41) ferner umfasst
- Senden einer Anforderungsnachricht (202), optional nach Empfang eines von einer Nachricht und Daten von der IoT-Vorrichtung (201), um die Identität des Dienstanbieternetzwerks zu erhalten (41), das mit der IoT-Vorrichtung (100) verknüpft ist, wobei die Anforderungsnachricht (202) die Hersteller-IoT-Vorrichtungsidentität enthält; und
- Empfangen einer Nachricht (209), die die Identität des Dienstanbieternetzwerks (130) verknüpft mit der Hersteller-IoT-Vorrichtungsidentität enthält.

3. Verfahren nach Anspruch 2, wobei die Anforderungsnachricht (202) einen geografischen Ort des Vorrichtungs-Gateways (110) umfasst; oder
wobei die Anforderungsnachricht (202) eine Abonnementidentität des Vorrichtungs-Gateways (110) umfasst; oder
wobei die Anforderungsnachricht (202) einen Dienst umfasst, der mit der IoT-Vorrichtung verknüpft ist.

4. Verfahren nach Anspruch 1, wobei der Schritt zum Erhalten (41) ferner umfasst
- Empfangen einer unverlangten Aktualisierungsnachricht (300), umfassend die Identität des Dienstanbieternetzwerks (130) und der Hersteller-IoT-Vorrichtungsidentität, um das Vorrichtungs-Gateway (110) zu veranlassen, die einzigartige IoT-Vorrichtungskennung zu aktualisieren (305) oder zu kreieren (209); oder
wobei die einzigartige IoT-Vorrichtungskennung die Hersteller-IoT-Vorrichtungsidentität, die Identität des Dienstanbieternetzwerks (130) und die Art von Zugangstechnologie umfasst, die zwischen dem Vorrichtungs-Gateway und der IoT-Vorrichtung (100) verwendet wird.

5. Verfahren in einem Server eines Netzwerks (121) zum Bereitstellen für ein Vorrichtungs-Gateway (110) einer Identität eines Dienstanbieternetzwerks (130), das mit einer Internet der Dinge-, IoT, Vorrichtung (100) verknüpft ist, die mit dem Vorrichtungs-Gateway (110) verbunden ist, zum Kreieren (209) einer einzigartigen IoT-Vorrichtungskennung, das Verfahren umfassend:
- Empfangen einer Anforderungsnachricht (202), vom Vorrichtungs-Gateway (110), um die Identität des Dienstanbieternetzwerks zu erhalten (41), das mit der IoT-Vorrichtung (100) verknüpft ist, wobei die Anforderungsnachricht (202) eine Hersteller-IoT-Vorrichtungsidentität umfasst;
- Bestimmen einer Verknüpfung zwischen der Identität des Dienstanbieternetzwerks (130) und der Hersteller-IoT-Vorrichtungsidentität; und
- Validieren der Verknüpfung (205) und abhängig von einer erfolgreichen Validierung (205), Senden einer Nachricht an das Vorrichtungs-Gateway (304) zum Kreieren (209) der einzigartigen IoT-Vorrichtungskennung, wobei die Nachricht die Identität des Dienstanbieternetzwerks (130) und die Hersteller-IoT-Vorrichtungsidentität umfasst.

6. Verfahren nach Anspruch 5, wobei die Anforderungsnachricht (202) eine Abonnementidentität des Vorrichtungs-Gateways (110) umfasst; oder
wobei die Anforderungsnachricht (202) einen geografischen Ort des Vorrichtungs-Gateways (110) umfasst; oder
wobei die Anforderungsnachricht (202) einen Dienst umfasst, der mit der IoT-Vorrichtung (100) verknüpft ist.

7. Verfahren nach Anspruch 5, wobei der Schritt zum Validieren der Verknüpfung (205) der IoT-Vorrichtung (100) ferner umfasst
- Senden einer Validierungsnachricht (206) an das Dienstanbieternetzwerk (130), wobei die Validierungsnachricht (206) die Hersteller-IoT-Vorrichtungsidentität der IoT-Vorrichtung (100) umfasst; und
- Empfangen einer Validierungsantwort (207);
wobei die Validierungsantwort (207) als Option die Verknüpfung (205) validiert, die die Hersteller-IoT-Vorrichtungsidentität und die Identität des Dienstanbieternetzwerks (130) umfasst; oder
wobei die Validierungsantwort (207) als Option eine Identität eines neuen Dienstanbieternetzwerks (200), das mit der Hersteller-IoT-Vorrichtungsidentität verknüpft ist, umfasst; wobei als eine Option, in Antwort auf den Empfang der Validierungsantwort (207) das Verfahren ferner umfasst
- Senden einer zweiten Validierungsanforderung (206) an das neue Dienstanbieternetzwerk (200); und
- Empfangen einer zweiten Validierungsantwort- (208) Nachricht, die eine aktualisierte Verknüpfung bestätigt, die die Hersteller-IoT-Vorrichtungsidentität und die Identität des neuen Dienstanbieternetzwerks (200) umfasst.

8. Verfahren nach Anspruch 5, wobei das Verfahren ferner umfasst
- Empfangen einer unverlangten Nachricht (300), umfassend aktualisierte Verknüpfungen zwischen einer oder mehreren Hersteller-IoT-Vorrichtungsidentitäten und der Identität eines neuen, damit verknüpften Dienstanbieternetzwerks (200); und
- Speichern der aktualisierten Verknüpfungen (302).

9. Verfahren in einem Server eines Netzwerks zum Aktualisieren von Verknüpfungen (305) zwischen einem Dienstanbieternetzwerk (130) und einer oder mehreren Internet der Dinge-, IoT, Vorrichtungen (100), das Verfahren umfassend
- Empfangen einer unverlangten Nachricht (300), die eine oder mehrere aktualisierte Verknüpfungen zwischen der einen oder den mehreren Hersteller-IoT-Vorrichtungsidentitäten und einer Identität eines neuen Dienstanbieternetzwerks (200) umfasst;
- Speichern der aktualisierten Verknüpfungen (302); und
- Senden zu einem oder mehreren Vorrichtungs-Gateways (110) einer Nachricht (304), die die eine oder mehreren Hersteller-IoT-Vorrichtungsidentitäten und die Identität des neuen Dienstanbieternetzwerks (200) umfasst, zum Aktualisieren (305) einer oder mehrerer entsprechender einzigartiger IoT-Vorrichtungskennungen.

10. Computerprogramm, umfassend Anweisungen, die, wenn sie bei zumindest einem Prozessor ausgeführt werden, den zumindest einen Prozessor veranlassen, das Verfahren nach einem der Ansprüche 1 bis 9 auszuführen.

11. Vorrichtungs-Gateway (110), das konfiguriert ist zum dynamischen Kreieren (209) oder Aktualisieren (305) einer einzigartigen Internet der Dinge-, IoT, Vorrichtungskennung, das Vorrichtungs-Gateway (110) einen Schaltkreis (70) umfassend, der konfiguriert ist zum:
- Erhalten einer Identität eines Dienstanbieternetzwerks (41), das mit einer Hersteller-IoT-Vorrichtungsidentität der IoT-Vorrichtung (100) verknüpft ist;
- falls die einzigartige IoT-Vorrichtungskennung nicht bereits verfügbar ist, Kreieren (209) der einzigartigen IoT-Vorrichtungskennung, umfassend eine Verkettung der Identität des Dienstanbieternetzwerks (130) und der Hersteller-IoT-Vorrichtungsidentität;
- falls die einzigartige IoT-Vorrichtungskennung bereits verfügbar ist, Aktualisieren (305) der Identität des Dienstanbieternetzwerks (130) der einzigartigen IoT-Vorrichtungskennung; und
- Speichern der einzigartigen IoT-Vorrichtungskennung.

12. Server in einem Netzwerk, der konfiguriert ist zum Bereitstellen einer Identität eines Dienstanbieternetzwerks (130), das mit einer Internet der Dinge-, IoT, Vorrichtung (100) verknüpft ist, die mit einem Vorrichtungs-Gateway (110) verbunden ist, der Server einen Schaltkreis (80) umfassend, der konfiguriert ist zum:
- Empfangen einer Anforderungsnachricht (202), vom Vorrichtungs-Gateway (110), um die Identität des Dienstanbieternetzwerks zu erhalten (41), das mit der IoT-Vorrichtung (100) verknüpft ist, wobei die Anforderungsnachricht (202) eine Hersteller-IoT-Vorrichtungsidentität umfasst;
- Bestimmen einer Verknüpfung zwischen der Identität des Dienstanbieternetzwerks (130) und der Hersteller-IoT-Vorrichtungsidentität; und
- Validieren der Verknüpfung (205) und abhängig von einer erfolgreichen Validierung (205), Senden einer Nachricht an das Vorrichtungs-Gateway (304) zum Kreieren (209) der einzigartigen IoT-Vorrichtungskennung, wobei die Nachricht die Identität des Dienstanbieternetzwerks (130) und die Hersteller-IoT-Vorrichtungsidentität umfasst.

13. Server nach Anspruch 12, wobei zum Validieren der Verknüpfung (205) der IoT-Vorrichtung (100) der Schaltkreis (80) ferner konfiguriert ist zum
- Senden einer Validierungsnachricht (206) an das Dienstanbieternetzwerk (130); und
- Empfangen einer Validierungsantwort (207);
wobei die Validierungsantwort (207) als Option die Verknüpfung (205) der IoT-Vorrichtung (100) mit der Identität des Dienstanbieternetzwerks (130) bestätigt; oder
wobei die Validierungsantwort (207) die Identität eines neuen Dienstanbieternetzwerks (200) enthält; und wobei als eine Option der Schaltkreis (80) ferner konfiguriert ist zum
- Senden einer zweiten Validierungsanforderung (206) an das neue Dienstanbieternetzwerk (200); und
- Empfangen einer zweiten Validierungsantwort (208), die eine aktualisierte Verknüpfung bestätigt, die die Hersteller-IoT-Vorrichtungsidentität und die Identität des neuen Dienstanbieternetzwerks (200) umfasst.

14. Server nach Anspruch 12, wobei der Schaltkreis (80) ferner konfiguriert ist zum
- Empfangen einer unverlangten Nachricht (300), die eine oder mehrere aktualisierte Verknüpfungen zwischen einer oder mehreren Hersteller-IoT-Vorrichtungsidentitäten und der Identität eines neuen Dienstanbieternetzwerks (200) umfasst; und
- Speichern der aktualisierten Verknüpfungen (302).

15. Vorrichtungs-Gateway (110), das zum dynamischen Kreieren (209) und Aktualisieren (305) einer einzigartigen Internet der Dinge-, IoT, Vorrichtungskennung für eine IoT-Vorrichtung (100) konfiguriert ist, das Vorrichtungs-Gateway (110) umfassend:
ein Verarbeitungsmodul (91), konfiguriert zum Erhalten durch ein Kommunikationsmodul (93) einer Identität eines Dienstanbieternetzwerks (41), das mit einer Hersteller-IoT-Vorrichtungsidentität der IoT-Vorrichtung (100) verknüpft ist;
falls die einzigartige IoT-Vorrichtungskennung nicht bereits verfügbar ist, Kreieren (209) der einzigartigen IoT-Vorrichtungskennung, umfassend eine Verkettung der Identität des Dienstanbieternetzwerks (130) und der Hersteller-IoT-Vorrichtungsidentität;
falls die einzigartige IoT-Vorrichtungskennung bereits verfügbar ist, Abrufen der einzigartigen IoT-Vorrichtungskennung aus einem Speichermodul (92) und Aktualisieren (305) der Identität des Dienstanbieternetzwerks (130) der einzigartigen IoT-Vorrichtungskennung; und
Speichern der einzigartigen IoT-Vorrichtungskennung im Speichermodul (92);
wobei das Speichermodul (92) konfiguriert ist zum Aufbewahren von IoT-Vorrichtungsinformationen, die die Hersteller-IoT-Vorrichtungsidentität und die einzigartige IoT-Vorrichtungskennung umfassen, die durch das Verarbeitungsmodul (91) bereitgestellt werden;
wobei das Kommunikationsmodul (93) konfiguriert ist zum Erhalten der Identität des Dienstanbieternetzwerks (41) .

## Revendications

1. Procédé dans une passerelle de dispositif (110 pour créer dynamiquement (209) et mettre à jour (305) un identifiant de dispositif unique Internet des objets, IoT, le procédé comprenant de :
- obtenir un identifiant d'un réseau de fournisseur de service (41) associé à une identité de dispositif IoT de fabricant du dispositif IoT (100) ;
- si l'identifiant de dispositif IoT unique n'est pas déjà disponible, créer (209) l'identifiant de dispositif IoT unique comprenant une concaténation de l'identité du réseau fournisseur de service (130) et l'identité du dispositif IoT de fabricant ;
- si l'identifiant de dispositif IoT unique est déjà disponible, mettre à jour (305) l'identité du réseau fournisseur de service (130) de l'identifiant de dispositif IoT unique ; et
- mémoriser l'identifiant de dispositif IoT unique.

2. Procédé selon la revendication 1, dans lequel l'étape d'obtention (41) comprend en outre de :
- envoyer un message de demande (202), optionnellement lors de la réception d'un message de données provenant du dispositif IoT (201), pour obtenir l'identité du réseau fournisseur de service (41) associée au dispositif IoT (100), le message de demande (202) comprenant l'identité de dispositif IoT de fabricant ; et
- recevoir un message (209) comprenant l'identité du réseau fournisseur de service (130) associée à l'identité de dispositif IoT de fabricant.

3. Procédé selon la revendication 2, dans lequel le message de demande (202) comprend une localisation géographique de la passerelle de dispositif (110) ; ou
dans lequel le message de demande (202) comprend une identité d'abonnement de la passerelle de dispositif (110) ; ou
dans lequel le message de demande 202) comprend un service associé au dispositif IoT (100).

4. Procédé selon la revendication 1, dans lequel l'étape d'obtention (41) comprend en outre de :
- recevoir un message de mise à jour non sollicité (300) comprenant l'identité du réseau fournisseur de service (130) et l'identité du dispositif IoT de fabricant pour déclencher la passerelle du dispositif (110) afin de mettre à jour (305) ou créer (209) l'identifiant de dispositif unique IoT ; ou
dans lequel l'identifiant de dispositif IoT unique comprend l'identité de dispositif IoT de fabricant, l'identité du réseau fournisseur de service (130) et le type de technologie d'accès utilisé entre la passerelle de dispositif (110) et le dispositif IoT (100).

5. Procédé dans un serveur d'un réseau (121) de fourniture à une passerelle de dispositif (110) d'une identité d'un réseau fournisseur de service (130) associé à un dispositif d'Internet des objets IoT (100) connecté à la passerelle de dispositif (110) dans le but de créer (209) un identifiant de dispositif IoT unique, le procédé comprenant de :
- recevoir un message de demande (202) provenant de la passerelle de dispositif (110) pour obtenir l'identité du réseau fournisseur de services (41) associée au dispositif IoT (100), le message de demande (202) comprenant une identité de dispositif IoT de fabricant ;
- déterminer une association entre l'identité du réseau fournisseur de services (130) et l'identité de dispositif IoT de fabricant ; et
- valider l'association (205) et, sous condition d'une validation réussie (205), envoyer un message à la passerelle de dispositif (304) pour créer (209) l'identifiant de dispositif IoT unique, le message comprenant identité du réseau fournisseur de service (130) et l'identité de dispositif IoT de fabricant.

6. Procédé selon la revendication 5, dans lequel le message de demande (202) comprend l'identité d'abonnement de la passerelle de dispositif (110) ; ou
dans lequel le message de demande (202) comprend une localisation géographique de la passerelle de dispositif (110) ; ou
dans lequel le message de demande (202) comprend un service associé au dispositif IoT (100).

7. Procédé selon la revendication 5, dans lequel l'étape de validation de l'association (205) du dispositif IoT (100) comprend en outre de :
- envoyer un message de validation (206) au réseau fournisseur de service (130), le message de validation (206) comprenant l'identité de dispositif IoT de fabricant IoT (100) ; et
- recevoir une réponse de validation (207) ;
dans lequel, en option, la réponse de validation (207) valide l'association (205) comprenant l'identité de dispositif IoT de fabricant et l'identité du réseau fournisseur de service (130) ; ou
dans lequel, en option, la réponse de validation (207) comprend une identité d'un nouveau réseau fournisseur de services (200) associée à l'identité de dispositif IoT de fabricant ; dans lequel, en option, en réponse à la réception de la réponse validation (207), le procédé comprend en outre de
- envoyer une seconde demande de validation (206) au nouveau réseau fournisseur de service (200) ; et
- recevoir un second message de réponse de validation (208) confirmant une association mise à jour comprenant l'identité de dispositif IoT de fabricant et l'identité du nouveau réseau fournisseur de service (200).

8. Procédé selon la revendication 5, dans lequel le procédé comprend en outre de :
- recevoir un message non sollicité (300) comprenant des associations mises à jour entre une ou plusieurs identités de dispositif IoT de fabricant et l'identité d'un nouveau réseau fournisseur de service (200) associé à celui-ci ; et
- mémoriser les associations mises à jour (302).

9. Procédé dans un serveur d'un réseau pour mettre à jour des associations (305) entre un réseau fournisseur de service (130) et un ou plusieurs dispositifs d'Internet des objets IoT (100), le procédé comprenant de :
- recevoir un message non sollicité (300) comprenant une ou plusieurs associations mises à jour entre la ou les identités de dispositifs IoT de fabricants et une identité d'un nouveau réseau fournisseur de service (200) ;
- mémoriser les associations mises à jour (302) ; et
- envoyer à une ou plusieurs passerelles de dispositif (110) un message (304) comprenant là où les identités de dispositif IoT de fabricant et l'identité du nouveau réseau fournisseur de service (200) pour mettre à jour (305) un ou des identifiants de dispositifs IoT uniques correspondants.

10. Programme informatique, comprenant des instructions qui lorsqu'elles sont exécutées sur au moins un processeur amènent au moins un processeur à mettre en oeuvre le procédé selon une quelconque des revendications 1 à 9.

11. Passerelle de dispositif (110) configurée pour créer dynamiquement (209) ou mettre à jour (305) un identifiant de dispositif d'Internet des objets IoT unique, la passerelle de dispositif (110) comprenant un circuit (70) configuré pour :
- obtenir un identifiant d'un réseau de fournisseur de service (41) associé à une identité de dispositif IoT de fabricant du dispositif IoT (100) ;
- si l'identifiant de dispositif IoT unique n'est pas déjà disponible, créer (209) l'identifiant de dispositif IoT unique comprenant une concaténation de l'identité du réseau fournisseur de service (130) et l'identité du dispositif IoT de fabricant ;
- si l'identifiant de dispositif IoT unique est déjà disponible, mettre à jour (305) l'identité du réseau fournisseur de service (130) de l'identifiant de dispositif IoT unique ; et
- mémoriser l'identifiant de dispositif IoT unique.

12. Serveur dans un réseau, configuré pour fournir une identité et un réseau fournisseur de service (130) associé à un dispositif d'Internet des objets IoT (100), connecté à une passerelle de dispositif (110), le serveur comprenant un circuit (80) configuré pour :
- recevoir un message de demande (202) provenant de la passerelle de dispositif (110) pour obtenir l'identité du réseau fournisseur de services (41) associé au dispositif IoT (100), le message de demande (202) comprenant une identité de dispositif IoT de fabricant ;
- déterminer une association entre l'identité du réseau fournisseur de services (130) et l'identité de dispositif IoT de fabricant ; et
- valider l'association (205) et sous condition d'une validation réussie (205), envoyer un message à la passerelle de dispositif (304) pour créer (209) l'identifiant de dispositif IoT unique, le message comprenant identité du réseau fournisseur de service (130) et l'identité de dispositif IoT de fabricant.

13. Serveur selon la revendication 12, dans lequel pour valider l'association (205) du dispositif IoT (100), le circuit (80) est en outre configuré pour :
- envoyer un message de validation (206) au réseau fournisseur de service (130), le message de validation de 106 comprenant l'identité de dispositif IoT de fabricant IoT (100) ; et
- recevoir une réponse de validation (207) ;
dans lequel, en option, la réponse de validation (207) valide l'association (205) comprenant l'identité de dispositif IoT de fabricant et l'identité du réseau fournisseur de service (130) ; ou
dans lequel, en option, la réponse de validation (207) comprend une identité d'un nouveau réseau fournisseur de services (200) associé à l'identité de dispositif IoT de fabricant ; dans lequel, en option, en réponse à la réception de la réponse validation (207), le procédé comprend en outre de
- envoyer une seconde demande de validation (206) au nouveau réseau fournisseur de service (200) ; et
- recevoir un second message de réponse de validation (208) confirmant une association mise à jour comprenant l'identité de dispositif IoT de fabricant et l'identité du nouveau réseau fournisseur de service (200).

14. Serveur selon la revendication 12, dans lequel le circuit (80) est en outre configuré pour :
- recevoir un message non sollicité (300) comprenant des associations mises à jour entre une ou plusieurs identités de dispositif IoT de fabricant et l'identité d'un nouveau réseau fournisseur de service (200) associé à celui-ci ; et
- mémoriser les associations mises à jour (302).

15. Passerelle de dispositif (110) configurée pour créer dynamiquement (209) et mettre à jour (305) un identifiant unique de dispositif d'Internet des objets, IoT, pour un dispositif IoT (100), la passerelle de dispositif (110) comprenant :
- un module de traitement (91) configuré pour :
- obtenir par l'intermédiaire d'un module de communication (93) une identité d'un réseau fournisseur de service (41) associée à une identité de dispositif IoT de fabricant du dispositif IoT (100) ;
- si l'identité de dispositif IoT unique n'est pas déjà disponible, créer (209) l'identifiant de dispositif IoT unique comprenant une concaténation de l'identité du réseau fournisseur de service (130) et l'identité de dispositif IoT de fabricant ;
- si l'identifiant de dispositif IoT unique est déjà disponible, extraire l'identifiant de dispositif IoT unique d'un module de mémoire (92) et mettre à jour (305) l'identité du réseau fournisseur de services (130) de l'identifiant de dispositif IoT unique ; et
- mémoriser l'identifiant de dispositif IoT unique dans le module de mémorisation (92) ;
- le module de mémorisation (92) étant configuré pour
- conserver une information de dispositif IoT comprenant l'identité de dispositif IoT de fabricant et l'identifiant de dispositif IoT unique fourni par le module de traitement (91) ;
- le module de communication (93) étant configuré pour
- obtenir l'identité du réseau fournisseur de service (41) .
